# EUROPEAN PATENT APPLICATION

(11) **EP 1 387 027 A2**
(43) Date of publication of application: **04.02.2004**
(21) Application number: 03254646.7
(22) Date of filing: 25.07.2003
(51) Int. Cl.: E05B 47/00, E05B 65/12, E05B 15/04, H02K 7/00

(54) **Actuator assembly**

(30) Priority: 31.07.2002 GB 0217665
(71) Applicant: ArvinMeritor Light Vehicle Systems (UK) Ltd, Birmingham, West Midlands, B30 3BW (GB)
(72) Inventor: Coleman, Peter, Birmingham West Midlands, B38 9SQ (GB); Singh Kalsi, Gurbinder, Oldbury West Midlands, B68 0NF (GB)
(74) Representative: Jones, John Bryn

(57) **Abstract**

An actuator assembly (10,110) including an actuator drivingly connected by a transmission path to an output member (16,119), the actuator being capable of moving the output member about a pivot point (28,125) in a first direction from a rest position of the actuator assembly to an actuated position, and also being capable of moving the output member in a second direction from the actuated position to the rest position, the assembly further including an energy storing means (18,118) which provides a force, movement of the output member by the actuator in the first direction being assisted by the energy storing means and movement of the output member in the second direction by the actuator storing energy in the energy storing means, in which the energy storing means is positioned relative to the pivot point such that in the rest position, the force acts substantially through the pivot point so as to not generate any substantial resultant torque on the output member.

## Description

The present invention relates to actuator assemblies, in particular to actuator assemblies used to release or latch vehicle door latches.

Known actuator assemblies when used in vehicle door latches are only required to provide an output in one direction when actuating. The actuator assembly is returned to a rest position by powering an actuator assembly motor in a reverse direction. This return stoke does no work.

Our copending application EP1128006 exploits the fact that the return stroke can be used to do work and includes a form of energy storage means, for example a spring, arranged to store energy when the actuator is moving in a return direction, and assist the actuator when moving in the actuation direction. This allows the actuator to produce a higher output force in the actuation direction, or indeed allow a smaller actuator motor to be used for the same output force.

However, a problem with such an actuator assembly relates to the fact that once the energy has been stored in the spring, some form of retaining means is required to releasably retain the actuator in a rest position, thereby preventing the spring from driving the actuator in the actuation direction when actuation is not required.

This problem is overcome in EP1128006 by using retaining means such as a clutch or detent arrangement which is arranged in the actuator assembly so as to prevent the spring from driving the actuator. However, this requires the actuator assembly to include additional components and adds to the complexity of the assembly.

In some situations, the friction associated with the actuator assembly itself and/or friction associated with the components to be actuated is sufficient to overcome the energy stored in the spring, and therefore prevent the spring from driving the actuator in the actuation direction. However, relying on such friction tends to limit the force of the spring which can be used.

An object of the present invention is to provide an actuator assembly which is powered in an actuation direction and in a return direction (to store energy in an energy storage means) which is less complex.

According to the present invention there is provided an actuator assembly including an actuator drivingly connected by a transmission path to an output member, the actuator being capable of moving the output member about a pivot point in a first direction from a rest position of the actuator assembly to an actuated position, and also being capable of moving the output member in a second direction from the actuated position to the rest position, the assembly further including an energy storing means which provides a force, movement of the output member by the actuator in the first direction being assisted by the energy storing means and movement of the output member in the second direction by the actuator storing energy in the energy storing means, in which the energy storing means is positioned relative to the pivot point such that in the rest position, the force acts substantially through the pivot point so as to not generate any substantial resultant torque on the output member.

Advantageously this means that since there is no resultant torque acting on the output means, the output means remains in the rest position and therefore prevents the energy storing means from driving the actuator until actuation is required.

According to another aspect of the present invention there is provided an actuator assembly including an actuator drivingly connected by a transmission path to an output member, the actuator being capable of moving the output member about a pivot point in a first direction from a rest position of the actuator assembly to an actuated position, and also being capable of moving the output member in a second direction from the actuated position to the rest position, the assembly further including an energy storing means which provides a force, movement of the output member by the actuator in the first direction being assisted by the energy storing means over a substantial portion of the movement to the actuated position and movement of the output member in the second direction by the actuator storing energy in the energy storing means over a substantial portion of the movement to the rest position, in which the energy storing means is positioned relative to the pivot point such that in the rest position, the force acts to drive the output member in the second direction.

Advantageously this means that in the rest position the energy storing means drives the actuator in the second direction, and therefore prevents the energy storing means from driving the actuator until actuation is required.

The invention will now be described, by way of example only, with reference to the accompanying drawings, in which:-
Figure 1 is a view of an actuator assembly according to the present invention with the actuator in a rest position,
Figure 2 is a view of the actuator assembly of figure 1 with the actuator in an actuated position,
Figure 3 is a view of an alternative actuator assembly with the actuator in a rest position,
Figure 3A is a view of the actuator assembly of figure 3 with the actuator in an actuated position,
Figure 4 is an elevation view of parts of a latch assembly according to the present invention with a claw thereof at its outer first safety position,
Figure 5 is an opposite side view (opposite handed) of said parts,
Figure 6 is an elevation view as in Figure 4 but with the claw driven to an inner door fully closed position,
Figure 7 is another opposite side view showing unlatching with disablement of a drive pawl, and
Figure 8 is a view of another alternative latch assembly.

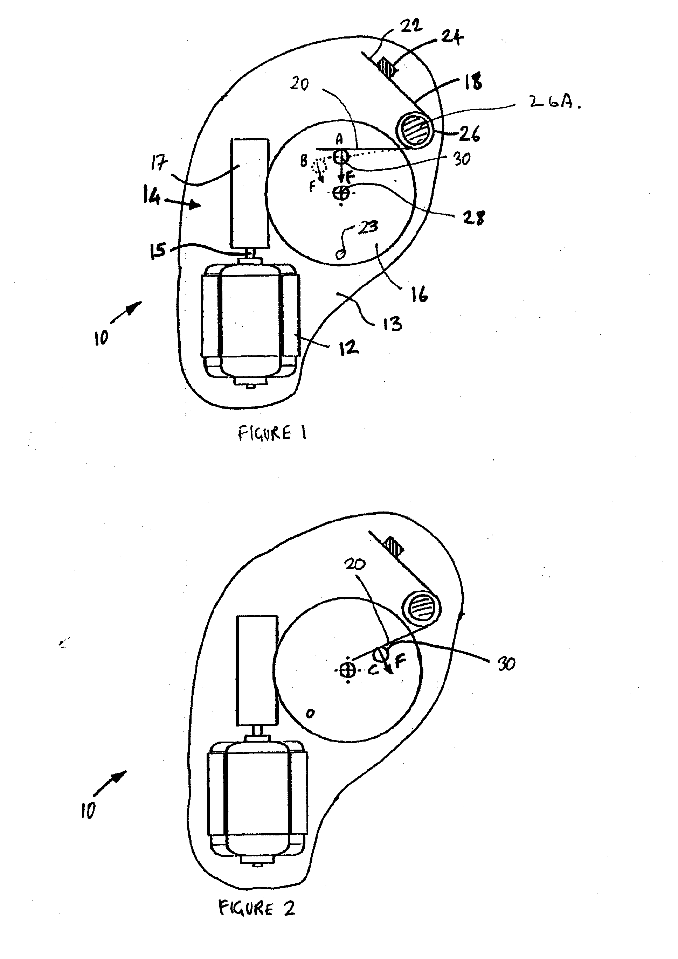

With reference to figure 1 there is shown an actuator assembly 10 including a housing 13 (only part of which is shown), an actuator in the form of an electric motor 12, an output member in the form of a worm wheel 16, and an energy storing means in the form of a helical spring 18.

The worm wheel 16 is rotationally mounted on the housing 13 at pivot 28, and includes an abutment in the form of a crank pin 30. The worm wheel includes a pin 23 mounted thereon which can be connected, via a suitable linkage (not shown in figure 1), to a device which is required to be actuated.

The helical spring 18 is mounted on the housing 13 and has a circular portion 26 including several coils mounted on boss 26A of housing 13. Spring 18 also includes a first arm 20 and a second arm 22. The first arm 20 abuts against the crank pin 30, and the second arm 22 abuts against a fixed abutment 24 which is mounted on the housing 13. The spring 18 thus acts to bias crank pin 30 away from fixed abutment 24.

The electric motor 12 is drivingly connected to the worm wheel 16 by the worm gear 17. The worm gear 17 is mounted rotationally fast on electric motor shaft 15 and engages with the worm wheel 16 via gear teeth (not shown).

It can be seen from figure 1 that the worm gear 17 and electric motor shaft 15 form a transmission path 14 between the electric motor 12 and the worm wheel 16, such that actuation of the electric motor 12 causes the worm wheel 16 to rotate about pivot 28.

The actuator assembly preferably includes a stop means (not shown) operable to prevent movement of the worm wheel 16 anticlockwise past the position shown in figure 1.

The actuator assembly also preferably includes a further stop means (not shown) operable to prevent movement of the worm wheel 16 clockwise past the position shown in figure 2.

### Operation of the actuator assembly is as follows:

Figure 1 shows the actuator assembly in a rest position with helical spring 18 having been wound up (see below). With the crank pin 30 in position A, the first arm 20 generates a force F which acts on the crank pin 30 in a direction which acts through pivot 28. Thus the force generated by the helical spring 18 does not generate a resultant torque on the worm wheel 16.

It will be appreciated that when the force acts substantially through pivot 28, the actuator assembly will remain stationary, and this is independent of any friction forces is the actuator or friction associated with the components to be actuated.

When actuation is required, an electrical current is supplied to the motor 12 resulting in shaft 15 rotating and consequently worm wheel 16 rotating in a first (actuating) direction (clockwise when viewing figure 1) towards the actuated position of figure 2. As the worm wheel 16 rotates, crank pin 30 moves in the first direction from position A of figure 1 to position C of figure 2, the movement being assisted by the force provided by the helical spring 18 which is acting on the crank pin 30 and therefore the worm wheel 16.

Once actuation has occurred, an electrical current is supplied to the motor 12 which causes it to run in a reverse direction, and results in the worm wheel 16 rotating in a second (return) direction (anticlockwise direction when viewing figure 2) towards the rest position of figure 1. This results in crank pin 30 moving from position C of figure 2 to position A of figure 1. It will be appreciated that as the worm wheel 16 moves in the second direction it works against the helical spring 18 which is being acted on by the crank pin 30, and causes the helical spring to wind up.

Thus when the actuator assembly is moving in the first (actuating) direction from its rest position to its actuated position the helical spring 18 is unwinding and thus releasing energy previously stored and assists the motor 14. When the actuator assembly moves in the second (return) direction from its actuated position to its rest position, the motor 12 acts to wind up, and therefore store energy in, the helical spring.

It will be appreciated that as the worm wheel 16 rotates in the first direction, the crank pin 30 will firstly slide along arm 20 towards the circular portion 26 of the helical spring before reaching its closest position following which it will slide back along arm 20 away from the circular portion 26.

In a further embodiment, the arm 22 can be locally fixed to abutment 24 such that no sliding occurs. Similarly the arm 20 can be locally fixed to pin 30 so no sliding occurs. Under these circumstances boss 26A can be dispensed with so as to allow the circular portion to float in space, as determined by the movement of arms 22 and 20.

Once the actuator assembly has been returned to its rest position by the motor 12 as shown in figure 1, the helical spring 18 acts on the crank pin 30. However, as described above, the force acting on the crank pin 30 acts substantially through the pivot 28, and thus the actuator assembly remains in the rest position until further current is supplied to the motor 14.

Even though the spring is unwinding when moving from the position shown in figure 1 to the position shown in figure 2, depending upon the geometry and spring rate, the torque applied to worm wheel 16 by the spring 18 can be arranged to start at zero, increase to a maximum and then decrease (in some cases back to zero) as the actuator moves from its rest to its actuated position. This has the advantage that the actuator only has to produce a relatively low torque when starting to return. The higher torque only being required on the return strokes once the motor is in motion.

Figure 1 also shows a second embodiment, where the crank pin is shown in rest position B. In this case the preferred stop means (not shown, but mentioned above) would be repositioned to allow the worm wheel to rotate this far anticlockwise.

The operation of the second embodiment of the actuator assembly differs from the first embodiment since, in the rest position, the force acting on the crank pin 30 no longer acts substantially through pivot 28, but is sufficiently offset from the pivot so as to generate a relatively low torque on the worm wheel and drive the worm wheel in the second (return) direction against the stop.

As the worm wheel is driven by the motor in the first direction from the rest position (position B), the crank pin firstly passes through position A before reaching the actuated position (position C) shown in figure 2. Therefore from position B to position A the motor is storing energy in the helical spring, whereas from position A to position C the motor is assisted by the helical spring. It should be noted that the angle that arm 20 rotates through between positions B and A is relatively small and hence only a relatively small amount of energy is stored in the spring when the crank pin moves from B to A. However the spring is significantly unwound when the crank pin moves from A to C thus releasing significant amounts of stored energy to assist the motor 12.

Thus, whether the crank pin is stopped at position A (first embodiment) or position B (second embodiment), the helical spring provides a force which either does not generate any substantial resultant torque on the worm wheel (position A), or drives the worm wheel in the second (return) direction (position B), and therefore the worm wheel is prevented from driving the motor in the first (actuating) direction unless actuated.

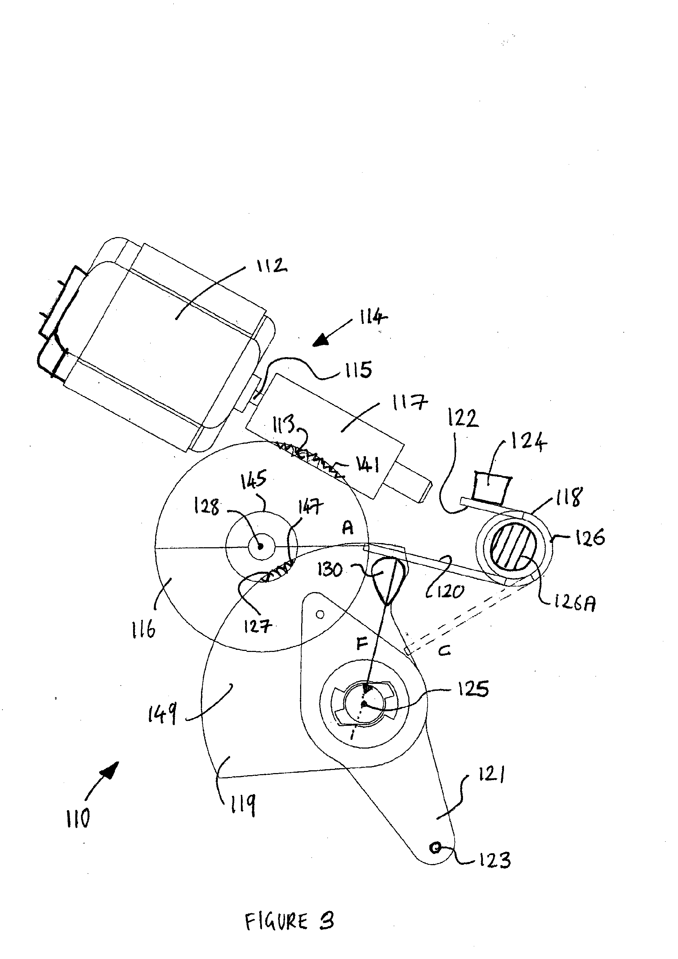

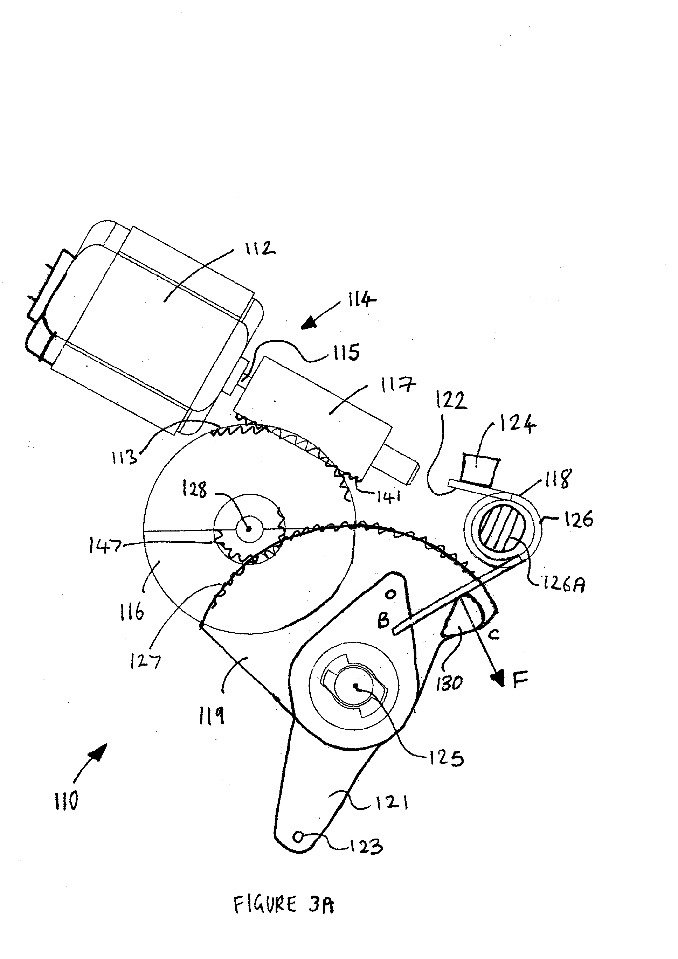

With reference to figure 3 and 3A there is shown an alternative actuator assembly 110. Corresponding features from the first and second embodiments of figure 1 are numbered 100 greater.

In this case the output member is in the form of an output lever 119.

Worm wheel 116 has wheel teeth 113 and is rotatably mounted on a chassis (not shown) at pivot 128.

Worm gear 117 has gear teeth 141. The worm gear is mounted on shaft 115 of motor 112 and positioned such that gear teeth 141 engage with wheel teeth 113 thereby drivingly connecting the worm gear 117 and the worm wheel 116.

The worm wheel has a wheel 145 which is located on the pivot 128. Wheel 145 has a smaller diameter and is rotationally fast with, the worm wheel 116. Wheel 145 has teeth 147.

The output lever 119 is rotatably mounted on the chassis at pivot 125. The output lever 119 has a quadrant portion 149 which has teeth 127 located on an outer surface thereof. A detent 130 is also located on the quadrant portion 149. The output lever 119 further includes a lower portion 121, upon which is mounted a pin 123.

The output lever 119 is positioned relative to the wheel 145 such that teeth 127 engage teeth 147 thereby drivingly connecting the worm wheel 116 to the output lever 119.

It can be seen from figure 3 that the worm gear 117, the electromotor shaft 115, and the worm wheel 116 form a transmission path 114 between the motor 112 and the output lever 119, such that actuation of the motor causes the output lever to rotate about pivot 125.

### Operation of the actuator assembly is as follows:-

Figure 3 shows the actuator assembly in a rest position with helical spring 118 having been wound up. It can be seen that with the detent 130 in position A, the first arm 120 generates a force F on the detent which acts through the pivot 125 of the output lever. Thus, as in the embodiment of figure 1, the force generated by the helical spring does not generate a resulting torque on the output member.

When actuation is required, an electrical current supplied to the motor 112 results in shaft 115 rotating and consequently worm wheel 116 rotating in an anticlockwise direction. causing output lever 119 to move in a first direction (clockwise when viewing figure 3) towards the actuated position of figure 3A. As the output lever 119 rotates, detent 130 moves in the first direction from position A of figure 3 to position C of figure 3A, the movement being assisted by the force provided by the helical spring 118 which is acting on the detent 130 and therefore the output lever 119.

Once actuation has occurred, an electrical current is supplied to the motor 112 which causes it to run in a reverse direction, and results in the worm wheel 116 rotating in a clockwise direction, and hence causing the output lever 119 to move in an anticlockwise (second (return)) direction towards the rest position of figure 3. As the output lever 119 rotates anticlockwise it works against the helical spring 118 which is being acted on by the detent 130, and causes the helical spring to wind up.

Thus, as in the first embodiment, when the actuator assembly is moving in the first (actuating) direction from its rest position to its actuated position the helical spring 118 is unwinding and thus releasing energy previously stored and assisting the motor 114. When the actuator assembly moves in the second (return) direction from its actuated position to its rest position, the motor 112 acts to wind up, and therefore store energy in, the helical spring.

Once the actuator assembly has been returned to its rest position as shown in figure 3 by the motor 112, the helical spring 118 acts on the detent 130. However, as described above, the force acting on the detent acts substantially through pivot 125, and thus the actuator assembly remains in the rest position until further current is supplied to the motor 114.

In an alternative embodiment, detent 130 can be arranged on the output lever 119 such that in the rest position, the force acting on detent 130 no longer acts through pivot 125, but sufficiently offset from the pivot so as to generate a relatively low torque on the output lever and drive the worm wheel in the second (return) direction (in a manner similar to the second embodiment).

The actuator assemblies described in figures 1 to 3A can be used to move a component of an associated device, for example, a component of a vehicle door latch assembly so as to change the state of the latch.

A typical latch can achieve various states, for example, unlocked (can be unlatched by operation of an inside or outside handle), locked (can be unlatched by operation of an inside handle but not an outside handle), latch bolt fully released (door open), latch bolt fully latched (door fully closed), latch bolt in first safety position (a door ajar position between fully latched and released where a striker is still retained by a latch bolt), superlocked (cannot be unlatched by operation of inside or outside handles), and child safety on (operation of an inside door handle does not unlatch the latch, whereas operation of the an outside door handle may or may not unlatch the latch depending upon whether the door is locked or unlocked).

It will be appreciated that some of these latch states are mutually exclusive, for example, a latch cannot be both unlocked and superlocked. However, other latch states can exist simultaneously, for example, a latch can be child safety on and locked. Similarly, a latch can be child safety on and unlocked.

A known prior art latch is described in our copending PCT application WO98/531565 which relates to power closing a vehicle door latch. Actuator assemblies according to the present invention can be used with this power closable latch as described in detail below.

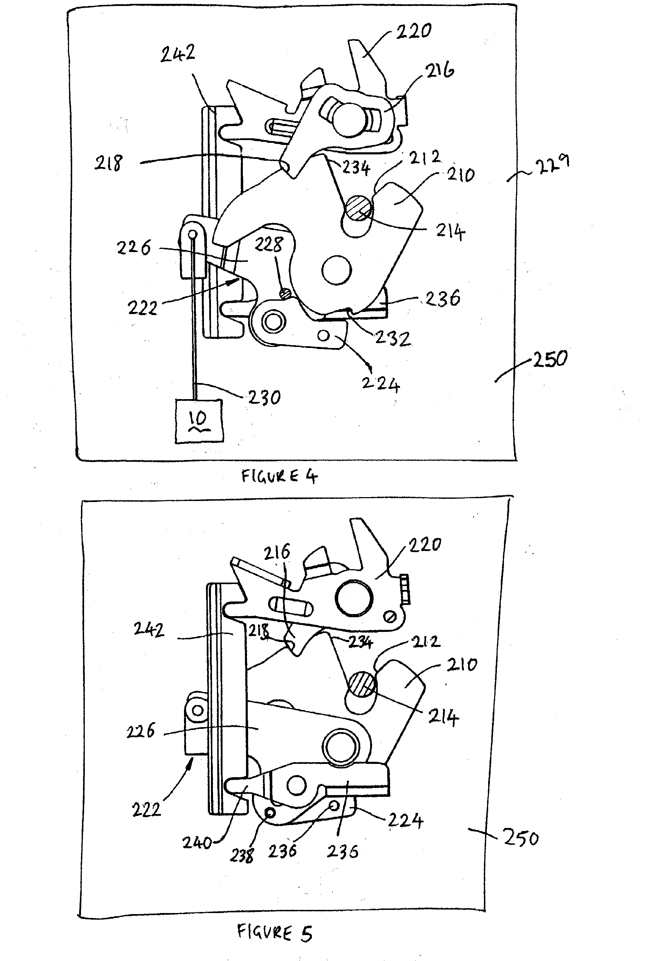

With reference to figures 4 and 5, a latch assembly 250, which will be operatively secured in a door (not shown) in a known manner, includes a conventional rotating latch claw 210 having a mouth 212 coacting with a striker 214 operatively mounted to the associated door post (not shown) and the actuator assembly of figures 1 and 2. In those Figures claw 210 is shown at an outer position at which it has been engaged by striker 214 as the door closed to a first safety position at which it is still slightly ajar, with little or no compression of its weather seals, turning claw 210 anticlockwise.

A latching pawl 16 has self-engagement with a ratchet tooth 218 formed as a notch in the upper claw periphery to retain the claw. Unlatching means, operated by the door handles (not shown) is of generally conventional construction and includes a release lever 220 selectively shiftable to free pawl 216 from the claw when the door is to be opened.

A power closing mechanism of the assembly includes a drive input lever 222 pivoted co-axially with the claw 210 and carrying a drive pawl 224 pivoted on a leftwardly projecting arm 226 thereof. Lever 222 is shown at its position of rest in figures 4 and 5 with arm 26 raised, in this position pawl 224 is held clear of the claw periphery by a back-stop pin 228 (mounted on a chassis 229 of the latch assembly) which abuts a projection on the upper edge of the pawl.

The distal end of arm 226 is connected by a vertical pull cable 230 to the actuator assembly 10. The cable 230 is attached to pin 23 on the worm wheel 16 of the actuator assembly 10.

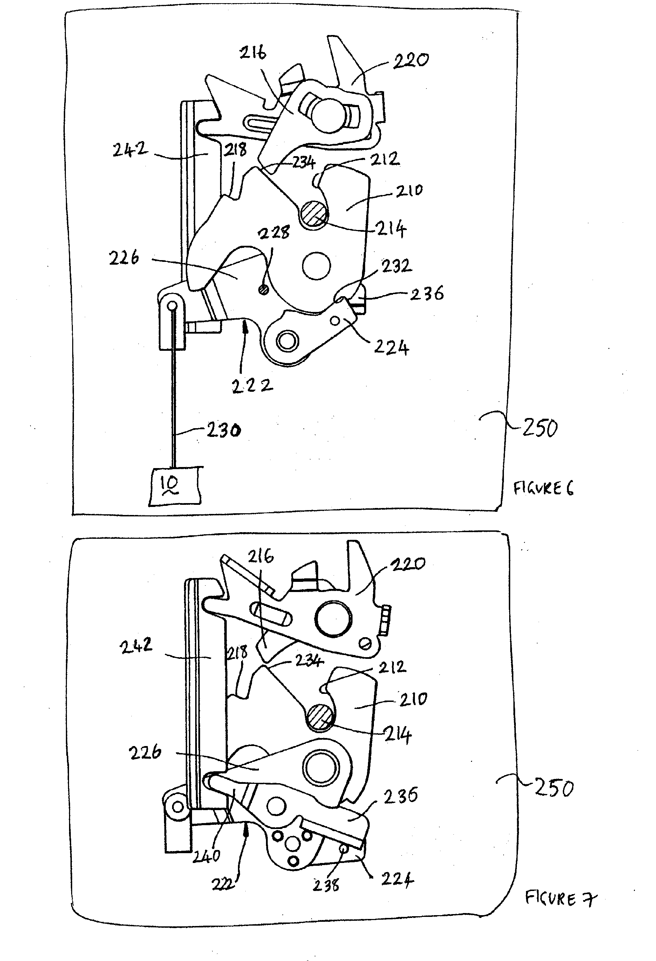

In operation, after the door has been opened to let passengers in or out of the vehicle, the door is either manually pulled or pushed towards a closed position resulting in the claw 210 mounted on the door approaching the striker. When the door has been moved to the first safety position with claw 210 in the outer position of figure 4, switching logic of the actuator assembly energises the actuator automatically after a time delay, driving the worm wheel in a first direction, and hence arm 226 downwards to the position shown in figure 6. As lever 222 turns clockwise pawl 224 is carried towards the claw periphery, at the same time spacing it from back-stop pin 228. It is free to self engage with a drive ratchet tooth 232 in the lower edge of claw 210, so driving the claw further anticlockwise to the inner position of figure 6. Thus, the claw co-acts with striker 214 to drive the door to the fully closed position, compressing the weather seals.

Latching pawl 216 engages the left hand top edge of mouth 212, serving as a further ratchet tooth 234, so securing the door closed in conventional manner.

Thus it can be seen that moving the actuator in a first direction has moved the drive pawl from a first position where the latch is in a first state (first safety position) to a second position where the latch is in a fully closed state.

As soon as lever 222 has completed its downward power stroke, i.e. almost immediately after actuation, the electrical circuit restores the drive unit to its rest condition and lever 222 is returned to its position of rest as in figure 4, with back-stop pin 228 ensuring that drive pawl 224 is again disengaged from the claw in order to allow for subsequent opening of the door.

To open the door latching pawl 216 is shifted in known manner by operation of release lever 220, freeing claw 210 to turn clockwise as the door is pushed open.

To ensure that the door can be opened even if power should fail or there should be an electrical malfunction the assembly includes disabling means. As best seen in figure 5, input lever arm 226 mounts a rocker lever 236 one arm of which is coextensive with drive pawl 224 and which project above a rearwardly extending pin 238 on that pawl. In normal operation, described above, pin 238 does not contact lever 236. The left hand tail 240 of rocker lever 236 is connected to an arm of release lever 220 by a rigid vertical link 242.

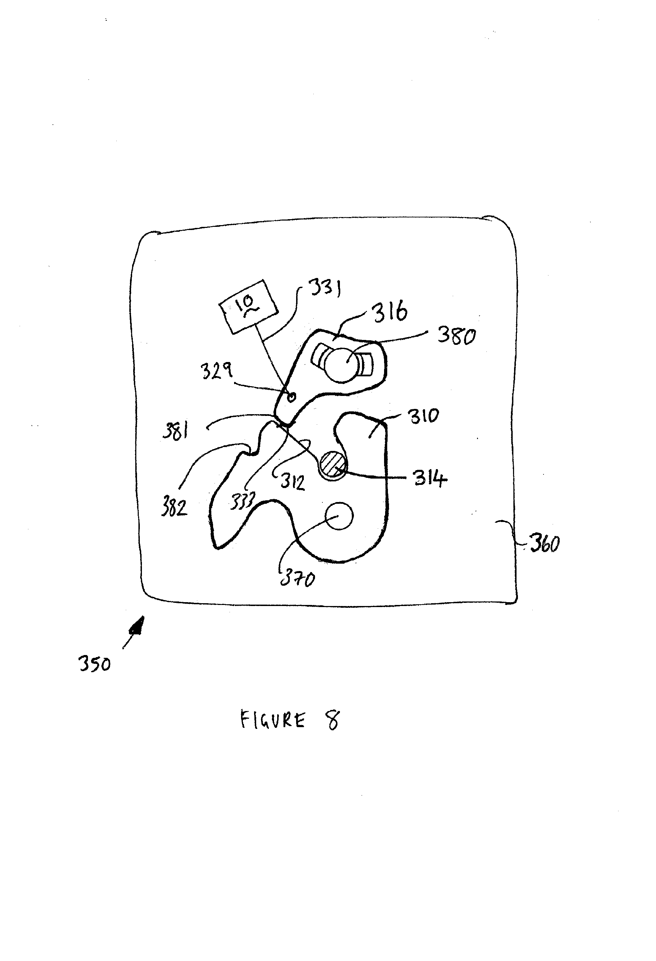

If the door is closed, i.e. the mechanism is in the figure 6 condition, but input lever 222 has failed to return to its rest position, drive pawl 224 will remain engaged with tooth 232 which would obstruct clockwise rotation of the claw for opening the door. However, when release lever 220 is operated to disengage latching pawl 216, link 242 is drawn up, rotating rocker lever 236 to the figure 7 position and depressing pin 238 to ensure that drive pawl 224 is disengaged.

As the motor power closes the latch, it is assisted by the spring, and as the motor returns to the rest position, it is working against and storing energy in the spring. Thus it is possible to use a lower output motor to power close the latch when using the actuator assembly of the present invention by utilising the energy stored in the spring when the motor returns to the rest position.

In another embodiment, the latch of figures 4 to 7 can be power latched by using the actuator assembly 110 of figures 3 and 4 by connecting pin 123 of the output lever to cable 230.

The principle of operation of latch assembly 250 is that the door is manually moved to the first safety position, and then electrically moved to the fully closed position. However, in principle, it is possible to provide a power closing latch wherein the door is manually moved to a position which is not a first safety position. Thus, the door might be manually moved to an "initial engagement state", typically as a striker comes into initial engagement with a claw, or initially enters a mouth of a claw. The latch would then be power closed from this initial engagement state to the fully closed state.

In other embodiments the initial engagement state could be detected by sensing means (such as micro switches) which detects a predetermined position of the door relative to the latch.

Actuator assemblies according to the present invention can also be used to power unlatch latches. With reference to figure 8 there is shown a power unlatching latch assembly 350.

The latch assembly 350 includes a rotating latch claw 310 having a mouth 312 for contacting with a striker 314 which is mounted on a door post (not shown). The claw has a fully closed abutment surface 333 and a first safety abutment surface 382.

The claw 310 is biased by a claw spring in a clockwise direction. A pawl tooth 381 of a pawl 316 self engages with the claw 310 to releasably retain the claw in a closed position. The pawl 316 is mounted on a latch chassis 360 at pivot 380, and the claw is mounted on the latch chassis at pivot 370. The pawl 316 has a pin 329 mounted thereon. The latch assembly 350 further includes the actuator assembly 10 of figures 1 and 2, the pin 23 of the actuator assembly being connected to the pin 329 of the pawl via a rod 331.

Figure 8 shows the latch in a fully closed state with the pawl in a first position, and the pawl tooth 318 in engagement with the fully closed abutment surface 333 of the claw 310.

To release the striker (and hence an associated door), operation of an inside or outside door handle (not shown) results in a micro switch (not shown) being actuated. This sends a signal to the actuator assembly 10 causing the motor to rotate the worm wheel in a first direction, resulting in rod 331 moving so as to move pawl 316 in a clockwise direction out of engagement with the claw 310, to a second position. The claw is then free to rotate about pivot 370, and movement of the door in an opening direction will result in claw 310 rotating in a clockwise direction until the striker 314 is disengaged from the claw mouth 312.

Thus it can be seen that moving the actuator in a first direction has moved the latch pawl 316 from a first position where the latch is in a fully closed state to a second position where the latch is free to open.

Once the latch is open, i.e. once the striker 314 has been released from the mouth 312, the actuator assembly 10 is almost immediately powered to a rest condition, ready for a subsequent closing of the door. In such a rest condition, the pawl is free to re-engage with first safety abutment 382 or close abutment surface 333 as will be described below.

Upon closing the door, claw 310 will initially engage the striker 314. Further closing movement of the door will cause the claw 310 to rotate anticlockwise until it returns to the fully closed position of figure 8. If the door is not fully closed or does not close properly, the claw 310 may not rotate sufficiently to allow engagement of the pawl tooth 381 with the fully closed abutment surface 333. In these circumstances, pawl tooth 381 engages with the first safety abutment 382 so as to prevent the door from inadvertently opening.

Thus as the motor moves the pawl out of engagement with the claw to release the latch claw it is assisted by the spring, and as the motor returns to the rest position, it is working against and storing energy in the spring. Thus it is possible to use a lower powered output motor to power release the latch when using the actuator assembly of the present invention by utilising the energy stored in the spring when the motor returns to the rest position.

In another embodiment, the latch of figure 8 can be power unlatched by using the actuator assembly 110 of figures 3 and 4 by connecting pin 123 of the output lever to pin 329 of the latch pawl using a suitable linkage.

Actuator assemblies according to the present invention can be used with other types of power unlatching latches.

## Claims

1. An actuator assembly (10,110) including an actuator drivingly connected by a transmission path to an output member (16,119), the actuator being capable of moving the output member about a pivot point (28,125) in a first direction from a rest position of the actuator assembly to an actuated position, and also being capable of moving the output member in a second direction from the actuated position to the rest position, the assembly further including an energy storing means (18,118) which provides a force, movement of the output member by the actuator in the first direction being assisted by the energy storing means and movement of the output member in the second direction by the actuator storing energy in the energy storing means, in which the energy storing means is positioned relative to the pivot point such that in the rest position, the force acts substantially through the pivot point so as to not generate any substantial resultant torque on the output member.

2. An actuator assembly according to claim 1 in which the energy storing means is positioned such that the force acts through the pivot point of the output member.

3. An actuator assembly (10,110) including an actuator (12,112) drivingly connected by a transmission path to an output member (16,119), the actuator being capable of moving the output member about a pivot point (28,125) in a first direction from a rest position of the actuator assembly to an actuated position, and also being capable of moving the output member in a second direction from the actuated position to the rest position, the assembly further including an energy storing means (18,118) which provides a force, movement of the output member by the actuator in the first direction being assisted by the energy storing means over a substantial portion of the movement to the actuated position and movement of the output member in the second direction by the actuator storing energy in the energy storing means over a substantial portion of the movement to the rest position, in which the energy storing means is positioned relative to the pivot point such that in the rest position, the force acts to drive the output member in the second direction.

4. An actuator assembly according to any preceding claim in which the energy storing means acts on the output member, and preferably acts on an abutment (30,130) of the output member and preferably the output member is a crank pin.

5. An actuator assembly according to claim 4 in which the abutment moves about the pivot point as the output member moves.

6. An actuator assembly according to any preceding claim in which the assistance provided by the energy storing means as the output member moves in the first direction progressively increases to a maximum and then decreases.

7. An actuator assembly according to any preceding claim in which the energy storing means is a helical spring.

8. An actuator assembly according to claim 7 in which the helical spring includes a circular portion (26,126) comprising one or more coils and at least one arm (20,120) which acts on the output member.

9. An actuator assembly according to claim 8 in which the spring has a further arm (22,122) which acts on a fixed abutment.

10. A latch assembly (250,350) including an actuator assembly according to any preceding claim, in which the actuator is operable to move a component of the latch assembly from a first position to a second position, thereby changing the latch state.

11. A latch assembly according to claim 10 in which movement of the component from the first position to the second position causes the latch to change state from a fully closed state to a fully open state.

12. A latch assembly according to claim 11 including a pivotally mounted latch claw (310), and a pawl (316) self-engaging said claw in the fully closed state, in which movement of the pawl from the first position to the second position causes the pawl to move out of engagement with the claw such that the latch changes to the fully open state.

13. A latch assembly according to claim 10 in which movement of the component from the first position to the second position causes the latch to change state from a first safety or initial engagement state to a fully closed state, thereby power closing the latch.

14. A latch assembly according to claim 13 including a pivotally mounted latch claw (210) having a mouth (212) operatively co-acting with a striker (214) as an associated door nears a first safety or initial engagement state, and a drive pawl (224), in which movement of the drive pawl from the first position to the second position causes the drive pawl to move the claw from the first safety or initial engagement state to the fully closed state thereby power closing the latch.

15. A latch assembly according to any one of claims 10 to 14 in which the actuator is substantially immediately driven in the second direction after the actuator has driven the component in the first direction from the first position to the second position.
